# EUROPEAN PATENT SPECIFICATION

(11) **EP 1 172 029 B1**
(45) Date of publication and mention of the grant of the patent: **14.12.2005**
(21) Application number: 01202224.0
(22) Date of filing: 11.06.2001
(51) Int. Cl.: A01J 5/017, A01K 5/01

(54) **A construction for automatically milking animals**
Konstruktion zum automatischen Melken von Tieren
Construction pour la traite automatique d'animaux

(30) Priority: 10.07.2000 NL 1015671
(43) Date of publication of application: 16.01.2002
(73) Proprietor: Lely Enterprises AG, 6300 ZUG (CH)
(72) Inventor: van den Berg, Karel, 2971 BR Bleskensgraaf (NL); Fransen, Renatus Ignatius Josephus, 3155 ZD Vlaardingen (NL); van der Lely, Alexander, 3065 NA Rotterdam (NL)
(74) Representative: Corten, Maurice Jean F.M.

(56) References cited:
- EP-A- 0 320 496
- EP-A- 0 647 390
- WO-A-93/13651

## Description

The invention relates to a construction for automatically milking animals according to the preamble of claim 1.

Such a construction with a feeding trough that can be pivoted away is know, see e.g. EP-A-0 320 496.

The invention aims at further developing and improving such a construction. According to the invention this is achieved by the measures described in the characterizing part of claim 1. In this manner there is a clear relation between feeding and milking for the animals to be milked. Moreover, the construction is very efficient.

The invention will now be explained in further detail with reference to the accompanying figures.
Figure 1 is a schematic plan view of the construction according to the invention, and
Figure 2 is a schematic side view of a detail of the construction according to the arrow II in Figure 1.

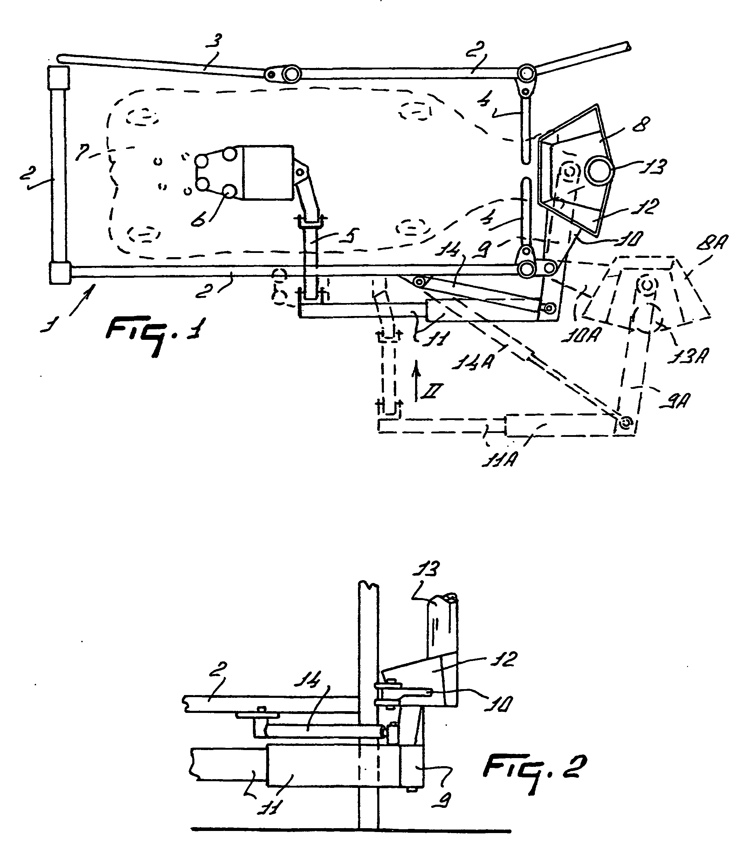

Figure 1 is a schematic plan view of a construction according to the invention. The construction comprises a milk box 1, known per se, which is provided with a fencing 2 with an entrance gate 3 and an exit gate 4. A milking robot, also known per se, is provided with a robot arm 5 that is controllable in three dimensions for connecting teat cups 6 to the teats of an animal 7 to be milked (schematically indicated by dotted lines). The milking robot is further provided with non-shown milk lines, animal identification means and control equipment. The teat cups 6 are movable to just under the udder of the animal 7 to be milked and away therefrom with the aid of the robot arm 5.

At the front side of the milk box 1, near the exit gate 4, there is provided a feeding trough 8 for feeding and/or watering the animal 7 to be milked. Said feeding trough 8 is movable between a first position beyond the reach of the animal 7 to be milked and a second position within the reach of the animal 7 to be milked.

According to the invention, there are provided means for coupling the movement of the feeding trough 8 to the movement of the robot arm 5. In the embodiment shown the means comprise a fixed connecting arm 9 between the robot arm 5 and the feeding trough 8. Of course, other connections are possible as well. The feeding trough 8 is pivotable relative to the milk box 1 by means of a pivotable arm 10.

The connecting arm 9 (see also the side view of Figure 2) is at one side (fixedly) connected with a telescopic part 11 of the robot arm 5, by means of which the teat cups 6 can be moved in the longitudinal direction of the milk box 1, and is at its other side rotatably connected with a base 12 of the feeding trough 8. The base 12 is connected with the feeding trough 8 via a tube 13. The pivotable arm 10 is at one side rotatably connected with the milk box 1 and is at its other side fixedly connected with the base 12 of the feeding trough 8. There is further provided a cylinder 14 which is at one side rotatably fastened to the milk box 1 and is at its other side rotatably fastened to the connecting arm 9, approximately in the region where the latter is connected with the robot arm 11.

The construction is capable of performing the movements of the feeding trough 8 and the robot arm 5 away from the animal 7 to be milked and/or towards the animal 7 to be milked by means of one single control element, such as e.g. the cylinder 14. This is illustrated by means of the elements 8a, 9a, 10a, 11a, 13a and 14a, indicated by dotted lines in Figure 1, which correspond to the pivoted-away position of the robot arm 5, 11, 11a and the feeding trough 8. The cylinder 14, 14a is then in an extended position.

The shown means 9, 14 are suitable for having performed simultaneously the movements of the feeding trough 8 and the robot arm 5, 11 away from the animal 7 to be milked The movements of the feeding trough 8 and the robot arm 5, 11 towards the animal 7 to be milked are performed simultaneously as well.

In a further, non-shown embodiment there are provided means which are suitable for having performed the movements of the feeding trough 8 and the robot arm 5 away from the animal 7 to be milked and/or towards the animal 7 to be milked with a particular interval. In that situation, said particular interval can be adjustable.

## Claims

1. A construction for automatically milking animals, said construction comprising a milk box (1) with a milking robot, which is provided with a controllable robot arm (5, 11) for connecting teat cups (6) to the teats of an animal (7) to be milked, said teat cups (6) being movable for that purpose to just under the udder of the animal (7) to be milked by means of the robot arm (5, 11), a feeding trough (8) for feeding and/or watering the animal (7) to be milked being provided at the front side of the milk box (1), said feeding trough (8) being movable between a first position beyond the reach of the animal (7) to be milked and a second position within the reach of the animal (7) to be milked, **characterized in that** means (9, 14) are provided for coupling the movement of the feeding trough (8) to the movement of the robot arm (5, 11), said means being suitable for having performed the movements of the feeding trough (8) and the robot arm (5, 11) away from the animal (7) to be milked and/or towards the animal (7) to be milked with a particular interval.

2. A construction as claimed in claim 1, **characterized in that** said particular interval is adjustable.

3. A construction as claimed in any one of claims 1 and 2, **characterized in that** the means (9, 14) comprise a connection (9) between the robot arm (5, 11) and the feeding trough (8).

4. A construction as claimed in claim 3, **characterized in that** the feeding trough (8) is connected with the robot arm (5, 11) via a connecting arm (9).

5. A construction as claimed in any one of claims 1 to 4, **characterized in that** the feeding trough (8) is pivotable relative to the milk box (1) by means of a pivotable arm (10).

6. A construction as claimed in any one of claims 1 to 5, **characterized in that** the construction is suitable for performing the movements of the feeding trough (8) and the robot arm (5, 11) away from the animal (7) to be milked and/or towards the animal (7) to be milked by means of one single control element, such as e.g. a cylinder (14).

7. A construction as claimed in claim 6, **characterized in that** one side of the control element (14) is fastened to the milk box (1) and its other end is fastened to the connecting arm (9).

## Patentansprüche

1. Vorrichtung zum automatischen Melken von Tieren, wobei die Vorrichtung eine Melkbox (1) mit einem Melkroboter umfaßt, der mit einem steuerbaren Roboterarm (5, 11) zum Anschließen von Zitzenbechern (6) an die Zitzen eines zu melkenden Tieres (7) versehen ist, wobei die Zitzenbecher (6) zu diesem Zweck mittels des Roboterarmes (5, 11) genau unter das Euter des zu melkenden Tieres (7) bewegbar sind, wobei an der Vorderseite der Melkbox (1) ein Futtertrog (8) zum Füttern und/oder Tränken des zu melkenden Tieres (7) vorgesehen ist, wobei der Futtertrog (8) zwischen einer ersten Position außerhalb der Reichweite des zu melkenden Tieres (7) und einer zweiten Position innerhalb der Reichweite des zu melkenden Tieres (7) bewegbar ist,
**dadurch gekennzeichnet, daß** Vorrichtungen (9, 14) vorhanden sind, um die Bewegung des Futtertroges (8) mit der Bewegung des Roboterarmes (5, 11) zu koppeln, wobei die Vorrichtungen geeignet sind, die Bewegungen des Futtertroges (8) und des Roboterarmes (5, 11) von dem zu melkenden Tier (7) weg und/oder auf das zu melkende Tier (7) zu in einem bestimmten Intervall durchführen zu lassen.

2. Vorrichtung nach Anspruch 1,
**dadurch gekennzeichnet, daß** das bestimmte Intervall einstellbar ist.

3. Vorrichtung nach einem der Ansprüche 1 und 2,
**dadurch gekennzeichnet, daß** die Vorrichtungen (9, 14) eine Verbindung (9) zwischen dem Roboterarm (5, 11) und dem Futtertrog (8) umfassen.

4. Vorrichtung nach Anspruch 3,
**dadurch gekennzeichnet, daß** der Futtertrog (8) mit dem Roboterarm (5, 11) durch einen Verbindungsarm (9) verbunden ist.

5. Vorrichtung nach einem der Ansprüche 1 bis 4,
**dadurch gekennzeichnet, daß** der Futtertrog (8) relativ zu der Melkbox (1) mit Hilfe eines schwenkbaren Armes (10) verschwenkbar ist.

6. Vorrichtung nach einem der Ansprüche 1 bis 5,
**dadurch gekennzeichnet, daß** die Vorrichtung geeignet ist, die Bewegungen des Futtertroges (8) und des Roboterarmes (5, 11) von dem zu melkenden Tier (7) weg und/oder zu dem zu melkenden Tier (7) hin mit Hilfe eines einzigen Steuerelements, wie z. B. eines Zylinders (14), durchzuführen.

7. Vorrichtung nach Anspruch 6,
**dadurch gekennzeichnet, daß** eine Seite des Steuerelements (14) an der Melkbox (1) und sein anderes Ende an dem Verbindungsarm (9) befestigt ist.

## Revendications

1. Construction pour la traite automatique d'animaux, ladite construction comprenant un box de traite (1) avec un robot de traite, qui est pourvu d'un bras de robot contrôlable (5, 11) pour relier des gobelets trayeurs (6) aux trayons d'un animal (7) destiné à être trait, lesdits gobelets trayeurs (6) étant mobiles dans ce but jusqu'à un emplacement juste en dessous du pis de l'animal (7) destiné à être trait au moyen du bras de robot (5, 11), une auge d'alimentation (8) pour alimenter et/ou abreuver l'animal (7) destiné à être trait étant fournie au niveau du côté avant du box de traite (1), ladite auge d'alimentation (8) étant mobile entre une première position au-delà de la portée de l'animal (7) destiné à être trait et une seconde position à la portée de l'animal (7) destiné à être trait, **caractérisé en ce que** des moyens (9, 14) sont fournis pour coupler le mouvement de l'auge d'alimentation (8) au mouvement du bras de robot (5, 11), lesdits moyens étant appropriés pour réaliser les mouvements de l'auge d'alimentation (8) et du bras de robot (5, 11) pour les éloigner de l'animal (7) destiné à être trait et/ou pour les rapprocher de l'animal (7) destiné à être trait avec un intervalle particulier.

2. Construction selon la revendication 1, **caractérisé en ce que** ledit intervalle particulier est réglable.

3. Construction selon l'une quelconque des revendications 1 et 2, **caractérisé en ce que** les moyens (9, 14) comprennent une liaison (9) entre le bras de robot (5, 11) et l'auge d'alimentation (8).

4. Construction selon la revendication 3, **caractérisé en ce que** l'auge d'alimentation (8) est reliée au bras de robot (5, 11) par l'intermédiaire d'un bras de liaison (9).

5. Construction selon l'une quelconque des revendications 1 à 4, **caractérisé en ce que** l'auge d'alimentation (8) peut pivoter par rapport au box de traite (1) au moyen d'un bras pivotant (10).

6. Construction selon l'une quelconque des revendications 1 à 5, **caractérisé en ce que** la construction est appropriée pour réaliser les mouvements de l'auge d'alimentation (8) et du bras de robot (5, 11) pour les éloigner de l'animal (7) destiné à être trait et/ou pour les rapprocher de l'animal (7) destiné à être trait au moyen d'un élément de contrôle unique tel que par exemple un vérin (14).

7. Construction sel_on la revendication 6, **caractérisé en ce qu'**un côté de l'élément de contrôle (14) est fixé au box de traite (1) et son autre extrémité est fixée au bras de liaison (9).
